# EUROPÄISCHE PATENTANMELDUNG

(11) **EP 3 357 555 A1**
(43) Veröffentlichungstag der Anmeldung: **08.08.2018**
(21) Anmeldenummer: 18151053.8
(22) Anmeldetag: 10.01.2018
(51) Int. Cl.: B01D 36/00, B01D 29/21, B01D 29/58

(54) **FLÜSSIGKEITSFILTEREINSATZ UND FLÜSSIGKEITSFILTER MIT KORROSIONSSCHUTZ FÜR ÄUSSERE PUMPEN**

(30) Priorität: 07.02.2017 DE 102017001099
(71) Anmelder: Mann + Hummel GmbH, 71636 Ludwigsburg (DE)
(72) Erfinder: EBLE, Jonas, 74235 Erlenbach (DE); SPELTER, Dr. Lars, 71254 Ditzingen (DE); BAUMANN, Christoph, 71696 Möglingen (DE)
(74) Vertreter: Seyboth, Matthias

(57) **Zusammenfassung**

Die Erfindung betrifft einen Flüssigkeitsfiltereinsatz (26). Der erfindungsgemäße Flüssigkeitsfiltereinsatz (26) für einen Flüssigkeitsfilter (10) umfasst ein Vorfilterelement (30) und ein Hauptfilterelement (28), die in einer zur Längsachse (34) des Flüssigkeitsfiltereinsatzes (26) axialen Richtung übereinanderliegend angeordnet sind. Ferner umfasst er eine Verbindung (108), durch welche die Flüssigkeit von dem Vorfilterelement (30) zu dem Hauptfilterelement (28) fließen kann, wobei das Vorfilterelement (30) eine Wasserabscheideeinheit (60) zum Abscheiden von in der Flüssigkeit enthaltenem Wasser und ein Filtermedium (36) aufweist. Die Wasserabscheideeinheit (60) ist derart zwischen dem Filtermedium (36) des Vorfilterelements (30) und der Verbindung (108) angeordnet, dass die Flüssigkeit von diesem Filtermedium (36) durch die Wasserabscheideeinheit (60) in die Verbindung (108) fließen kann, wobei die Wasserabscheideeinheit (60) einen Wasserablaufkanal (74) für das aus der Flüssigkeit abgeschiedene Wasser aufweist, der sich in axialer Richtung zumindest teilweise durch das Hauptfilterelement (28) erstreckt.

## Beschreibung

### Technisches Gebiet

Die Erfindung betrifft einen Flüssigkeitsfiltereinsatz für einen Flüssigkeitsfilter, durch welchen Korrosionsschäden an Pumpen durch Wasser vermieden werden können und Wasser zuverlässig aus der zu filternden Flüssigkeit abgetrennt werden kann.

### Stand der Technik

Die US 2008/0135469 A1 offenbart ein Flüssigkeitsfiltersystem in Form eines Kraftstofffiltersystems, in welchem ein erster Teilchenfilter einem zweiten Teilchenfilter fluidisch vorgeschaltet ist. Der erste Teilchenfilter sorgt außerdem für eine Tröpfchenbildung des Wassers, welches in dem Kraftstoff enthalten ist. Zwischen dem ersten und dem zweiten Teilchenfilter ist ein Stoff angeordnet, durch welchen die Wassertröpfchen nicht hindurchfließen können. Sie bewegen sich an dem Stoff entlang zu einem Sammelbecken.

Nachteilig dient der erste Teilchenfilter gleichzeitig als Koaleszerelement, was die Wahl des Materials für diesen Teilchenfilter einschränkt.

Die DE 10 2009 025 393 A1 offenbart einen Flüssigkeitsfilter in Form eines Kraftstofffilters, welcher ein Koaleszerelement, ein fluidisch nachgeschaltetes Vorfilterelement und ein dem Vorfilterelement fluidisch nachgeschaltetes Hauptfilterelement umfasst. Das Koaleszerelement, das Vorfilterelement und das Hauptfilterelement sind entlang eines gemeinsamen Mittelrohres angeordnet.

Nachteilig weist dieses Filtersystem durch die getrennten Koaleszer-, Vorfilter- und Hauptfilterelemente eine große räumliche Ausdehnung auf.

Die DE 10 2015 003 165 A1 offenbart einen Flüssigkeitsfiltereinsatz in Form eines Kraftstofffiltereinsatzes für einen Kraftstofffilter umfassend ein Vorfilterelement und ein Hauptfilterelement, wobei das Hauptfilterelement eine Wasserabscheideeinheit zum Abscheiden von in dem Kraftstoff enthaltenem Wasser aufweist. Der Kraftstoff wird hierbei in der Regel durch eine Pumpe von dem Vorfilterelement zu dem Hauptfilterelement gepumpt.

Nachteilig enthält der Kraftstoff in diesem Filtersystem einen hohen Anteil an Wasser, wenn er durch die Pumpe zwischen Vorfilterelement und Hauptfilterelement fließt. Hierdurch kann das Werkstoffmaterial der Pumpe angegriffen und beschädigt werden. Weiterhin wird das Wasser von der Pumpe in kleine Tröpfchen zerteilt, was die Wasserabscheidung erschwert.

Aufgabe der Erfindung ist es deshalb, einen kompakten Flüssigkeitsfiltereinsatz bereitzustellen, durch welchen von Wasser verursachte Schäden in einer zu dem genannten Zweck verwendeten Pumpe vermieden werden können und der eine zuverlässige Wasserabscheidung erleichtert und eine einfachere Entlüftung ermöglicht. Aufgabe der Erfindung ist es weiterhin, einen Flüssigkeitsfilter mit einem solchen Flüssigkeitsfiltereinsatz bereitzustellen.

Die Aufgabe wird durch einen Flüssigkeitsfiltereinsatz gemäß Anspruch 1 gelöst. Der erfindungsgemäße Flüssigkeitsfilter weist die in Anspruch 4 angegebenen Merkmale auf. Vorteilhafte Ausgestaltungen ergeben sich aus den jeweils rückbezogenen Unteransprüchen.

### Offenbarung der Erfindung

Der erfindungsgemäße Flüssigkeitsfiltereinsatz für einen Flüssigkeitsfilter umfasst ein Vorfilterelement und ein Hauptfilterelement, die in einer zur Längsachse des Flüssigkeitsfiltereinsatzes axialen Richtung übereinanderliegend und miteinander verbunden angeordnet sind. Ferner umfasst er eine Verbindung, durch welche die Flüssigkeit von dem Vorfilterelement zu dem Hauptfilterelement fließen kann, wobei das Vorfilterelement eine Wasserabscheideeinheit zum Abscheiden von in der Flüssigkeit enthaltenem Wasser und ein Filtermedium aufweist. Dabei ist die Wasserabscheideeinheit derart zwischen dem Filtermedium des Vorfilterelements und der Verbindung angeordnet, dass die Flüssigkeit von diesem Filtermedium durch die Wasserabscheideeinheit in die Verbindung fließen kann. Das Filtermedium der Vorfiltereinheit ist also mit der Wasserabscheideeinheit und die Wasserabscheideeinheit wiederum mit der Verbindung, insbesondere unmittelbar, fluidisch verbunden. Das Vorfilterelement und das Hauptfilterelement können insbesondere fest miteinander verbunden sein.

Der Partikelabscheidegrad nimmt vom Vorfilter zum Hauptfilter zu. Der Vorfilter dient erfindungsgemäß dem Schutz der Kraftstoffförderpumpe (Niederdruck) und der Hauptfilter dient dem Schutz des Hochdrucksystems (Einspritzpumpe und Injektoren).

Der Vorfilter verlängert zudem die Standzeit des Hauptfilters, indem gröbere Partikel bereits vom Vorfilter herausgefiltert werden und der nachfolgende Hauptfilter somit eine gegenüber einer nicht vorgefilterten Flüssigkeit geringere Partikelfracht bewältigen muss. Der Abscheidegrad kann hierbei anschaulich über die feinere Porenstruktur des Filtermediums des Hauptfilters (Hauptfiltermedium) gegenüber dem Filtermedium des Vorfilters (Vorfiltermedium) beschrieben werden; auch kommen gegenüber dem Vorfiltermedium im Hauptfiltermedium feinere Fasern zum Einsatz.

Die erfindungsgemäße Anordnung des Vorfilters in Richtung der Längsachse des Flüssigkeitsfilters (in Einbaurichtung) gegenüber dem Hauptfilter obenliegend, im Vergleich zur einer Anordnung des Vorfilters in Richtung der Längsachse des Flüssigkeitsfilters unter dem Hauptfilter liegend, hat den Vorteil einer besseren und einfacheren Entlüftung und eines gesichert schnellen Motorstarts. Die angesaugte Luft oder auch durch Ausgasung entstehende Luft sammelt sich im oberen Teil des Gehäuses und kann konstruktiv einfach über das zentrale Entlüftungselement abgeführt werden. Dies ermöglicht es, das Gehäuse möglichst luftpolsterfrei zu halten und somit einen schnellen Motorstart sicherzustellen. Beim untenliegenden Hauptfilter schiebt der zur Verfügung stehende Druck im System die verbleibende Luft konstruktiv zur Entlüftung. Auf der Druckseite entsteht systembedingt bereits weniger Luft (keine Ausgasung durch Unterdruck) und bei einer guten Entlüftung des Vorfilters wird auch nur wenig Luft aus diesem Teil des Systems weitergeführt. Liegt der Vorfilter jedoch gegenüber dem Hauptfilter unten, so gestaltet sich die Entlüftung schwieriger.

Vorteilhaft kann das Wasser aus der Flüssigkeit schon ausgeschieden werden, bevor es zu dem Hauptfilter gepumpt wird. Hierdurch werden mögliche Korrosionsschäden an der Pumpe vermieden, welche die Flüssigkeit bei dem Flüssigkeitsfilter gemäß der DE 10 2015 003 165 A1 von dem Vorfilter zum Hauptfilter pumpt. Weiterhin ermöglicht die Anordnung der Wasserabscheideeinheit an dem Vorfilter eine kompaktere Bauweise des Flüssigkeitsfiltereinsatzes, als wenn diese am Hauptfilter angeordnet ist.

Eine vorteilhafte Ausgestaltung des Flüssigkeitsfiltereinsatzes ist dadurch gekennzeichnet, dass die Wasserabscheideeinheit einen Wasserablaufkanal für das aus der Flüssigkeit abgeschiedene Wasser aufweist, der sich in axialer Richtung zumindest teilweise durch das Hauptfilterelement erstreckt.

Das Vorfilterelement ist vorzugsweise im Betriebszustand des Flüssigkeitsfiltereinsatzes über dem Hauptfilterelement angeordnet, wodurch eine besonders kompakte Ausbildung des Flüssigkeitsfiltereinsatzes erzielbar ist.

Vorteilhaft kann das Wasser durch den Wasserablaufkanal unmittelbar nach der Wasserabscheideeinheit von der Flüssigkeit getrennt abgeführt werden. Hierdurch wird eine Vermischung nach Durchlaufen der Wasserabscheideeinheit verhindert.

Ein erfindungsgemäßer Flüssigkeitsfilter ist dadurch gekennzeichnet, dass er ein Flüssigkeitsfiltergehäuse und einen erfindungsgemäßen Flüssigkeitsfiltereinsatz im Flüssigkeitsfiltergehäuse aufweist. Hierbei weist die Verbindung insbesondere einen Pumpenanschluss auf. Dadurch kann vorteilhaft eine Pumpe angeschlossen werden, um Flüssigkeit durch den Flüssigkeitsfilter zu pumpen.

Eine vorteilhafte Ausgestaltung des erfindungsgemäßen Flüssigkeitsfilters ist dadurch gekennzeichnet, dass das Flüssigkeitsfiltergehäuse einen Flüssigkeitskanal aufweist, der mit dem Pumpenanschluss fluidisch verbunden ist. Hierdurch kann die Flüssigkeit vorteilhaft nach der Trennung von dem Wasser in einfacher Weise zur weiteren Verwendung aus dem Flüssigkeitsfiltergehäuse herausgeleitet und zu einer Pumpe geführt werden.

Eine vorteilhafte Ausgestaltung des erfindungsgemäßen Flüssigkeitsfilters ist dadurch gekennzeichnet, dass der Pumpenanschluss mit einer Pumpe des Flüssigkeitsfilters verbunden ist, wobei die Pumpe weiterhin fluidisch mit dem Hauptfilterelement verbunden ist. Durch eine solche fluidische Verbindung kann vorteilhaft die Flüssigkeit durch die Pumpe unter Druck zu dem Hauptfilterelement geleitet werden. Bezüglich des Vorfilterelements, das die Wasserabscheideeinheit und ein Filtermedium aufweist, ist in diesem Fall der Wasserabscheider auf die Bedingungen auf der Saugseite optimiert ausgelegt.

Die eingangs beschriebene Verbindung kann somit aus mehreren Bauteilen bestehen. Insbesondere kann die Verbindung den Flüssigkeitskanal, zumindest einen Pumpenanschluss und/oder einen Schlauch aufweisen, um das Vorfilterelement mit dem Hauptfilterelement fluidisch zu verbinden.

Eine weitere Ausgestaltung des erfindungsgemäßen Flüssigkeitsfilters ist dadurch gekennzeichnet, dass der Flüssigkeitsfilter in Form eines Kraftstofffilters ausgebildet ist.

Eine weitere Ausgestaltung des erfindungsgemäßen Flüssigkeitsfilters ist dadurch gekennzeichnet, dass der Flüssigkeitsfilter in Form eines Ölfilters ausgebildet ist.

### Kurze Beschreibung der Zeichnungen

Weitere Merkmale und Vorteile der Erfindung ergeben sich aus der nachfolgenden detaillierten Beschreibung eines Ausführungsbeispiels der Erfindung, aus den Patentansprüchen sowie anhand der Figuren der Zeichnung, die erfindungswesentliche Einzelheiten zeigt. Die verschiedenen Merkmale können je einzeln für sich oder zu mehreren in beliebigen Kombinationen bei Varianten der Erfindung verwirklicht sein. Die in der Zeichnung gezeigten Merkmale sind derart dargestellt, dass die erfindungsgemäßen Besonderheiten deutlich sichtbar gemacht werden können.
In der Zeichnung zeigen:
- Fig. 1: einen Flüssigkeitsfilter mit einem Flüssigkeitsfiltergehäuse und einem darin angeordneten Filtereinsatz mit einem Vor- und einem Hauptfilter-element in einer isometrischen Schnittdarstellung;
- Fig. 2: den Flüssigkeitsfilter aus Fig. 1 in einem Längsschnitt; und
- Fig. 3: den Filtereinsatz aus Fig. 1 in einer freigestellten Schnittdarstellung.

### Ausführungsform(en) der Erfindung

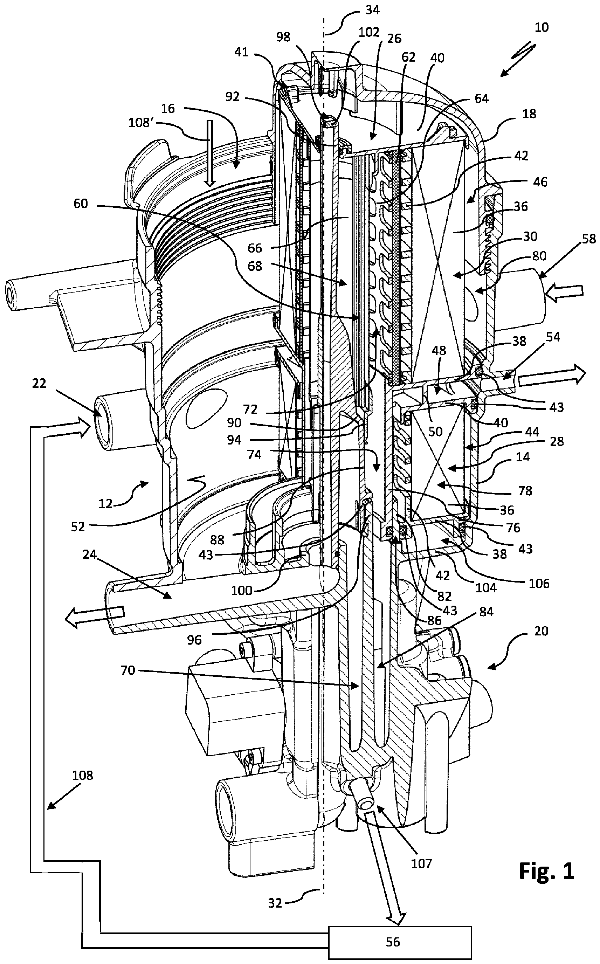

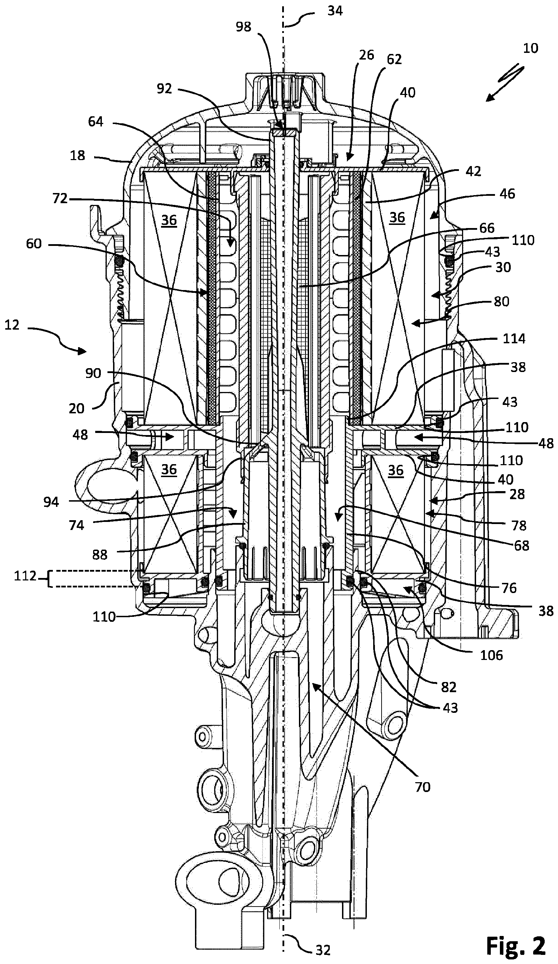

In den Figuren 1 und 2 ist ein Flüssigkeitsfilter **10** zum Herausfiltern von in einer Flüssigkeit, insbesondere Dieselkraftstoff, enthaltenen Verunreinigungen gezeigt. Der Flüssigkeitsfilter 10 ist beispielsweise für den Einsatz bei Nutzfahrzeugen mit Verbrennungsmotor geeignet.

Der Flüssigkeitsfilter 10 umfasst ein öffenbares Flüssigkeitsfiltergehäuse **12** mit einem Filtertopf **14** mit einer Einführöffnung **16** und mit einem Gehäusedeckel **18** zum Verschließen des Filtertopfs 14. Der Gehäusedeckel 18 kann in den Filtertopf 14 eingeschraubt werden. Eine anders geartete Befestigung des Gehäusedeckels 18 am Filtertopf 14 ist vorstellbar. Das Flüssigkeitsfiltergehäuse 12 kann beispielsweise aus Metall oder aus einem Kunststoffmaterial bestehen. Am unteren Ende des Flüssigkeitsfiltergehäuses 12 ist ein sogenannter Filterkopf 20 ausgebildet. Der Flüssigkeitsfilter 10 ist somit in an sich bekannter Weise für eine stehende Anordnung im Betrieb ausgelegt.

Das Flüssigkeitsfiltergehäuse 12 weist einen Flüssigkeitszulauf **58** auf, der dem Zuführen der zu filtrierenden Flüssigkeit an den Flüssigkeitsfilter 10 dient. Ein Flüssigkeitsrücklauf **24** des Flüssigkeitsfiltergehäuses dient dem Rückführen von verunreinigter Flüssigkeit, z. B. an den vorgenannten Flüssigkeitstank.

Im Innenraum des Flüssigkeitsfiltergehäuses 12 ist ein Flüssigkeitsfiltereinsatz **26** angeordnet. Der Flüssigkeitsfiltereinsatz 26 umfasst ein Hauptfilterelement **28** und ein Vorfilterelement **30.** Die beiden Filterelemente 28, 30 sind in Richtung der Längsachse **32** des Flüssigkeitsfilters 10 übereinanderliegend im Flüssigkeitsfiltergehäuse 12 angeordnet. Die Längsachse 32 des Flüssigkeitsfilters 10 fällt mit der Längsachse **34** des Flüssigkeitsfiltereinsatzes 26 zusammen. Das Hauptfilterelement 28 ist dem Vorfilterelement 30 fluidisch nachgeschaltet angeordnet. Mit anderen Worten durchströmt die zu filternde Flüssigkeit im Betrieb vorliegend zuerst das im Flüssigkeitsfiltergehäuse 12 obenliegend angeordnete Vorfilterelement 30 und nachfolgend das unterhalb des Vorfilterelements 30 angeordnete Hauptfilterelement 28.

Das Vorfilterelement 30 und das Hauptfilterelement 28 sind jeweils als Rundfilterelemente mit einem zur Längsachse 34 des Flüssigkeitsfiltereinsatzes 26 ringförmig angeordneten Filtermedium **36** ausgeführt. Das Filtermedium 36 des Vorfilterelements 30 wie auch des Hauptfilterelements 28 sind von der zu filternden Flüssigkeit jeweils in einer zur Längsachse 34 des Flüssigkeitsfiltereinsatzes 26 radialen Richtung von außen nach innen durchströmbar. Die Filtermedien 36 sind jeweils als ein sternförmig gefalteter Filterbalg ausgeführt und zwischen einer unteren und einer oberen Endscheibe **38, 40** des betreffenden Filterelements 28, 30 gehalten angeordnet. Die obere Endscheibe 40 des Vorfilterelements 30 ist über eine Bajonettverbindung **41** mit dem Gehäusedeckel 18 lösbar verkoppelbar bzw. verkoppelt. Zur radial innenseitigen Abstützung der Filtermedien 36 des Vorfilterelements 30 wie auch des Hauptfilterelements 28 dient jeweils ein gitterförmiges Stützrohr **42.** Die Filtermedien 36 liegen innenseitig am jeweiligen Stützrohr, vorzugsweise unmittelbar, an.

Die einander zugeordneten Endscheiben 38, 40 des Vorfilterelements 30 und des Hauptfilterelements 28, d. h. die untere Endscheibe 38 des Vorfilterelements 30 und die obere Endscheibe 40 des Hauptfilterelements 28, sind in axialer Richtung voneinander beabstandet angeordnet. Diese beiden Endscheiben 38, 40 liegen jeweils über Dichtungselemente **43** am Flüssigkeitsfiltergehäuse 12 innenseitig dichtend (fluiddicht) an. Die beiden Endscheiben 38, 40 dienen dadurch als Dichtscheiben, durch die das Flüssigkeitsfiltergehäuse 12 innen in axialer Richtung in eine das Vorfilterelement 30 aufweisende Vorfilterkammer **46** und eine das Hauptfilterelement 28 aufweisende Hauptfilterkammer **44** unterteilt ist. Zwischen der oberen Endscheibe 40 des Hauptfilterelements 28 und der unteren Endscheibe 38 des Vorfilterelements 30 ist ein Ausgangskanal **48** für die durch das Vorfilterelement 30 und Hauptfilterelement 28 gefilterte Flüssigkeit angeordnet. Der Ausgangskanal 48 ist durch die einander zugeordneten Endscheiben 38, 40 des Vor- und Hauptfilterelements 28, 30 in axialer Richtung unmittelbar begrenzt.

Die obere Endscheibe 40 des Hauptfilterelements 28 und die untere Endscheibe 38 des Vorfilterelements 30 können einstückig miteinander ausgebildet und können insbesondere als Kunststoffspritzgussteil ausgeführt sein. Wie aus den Figuren 1 und 2 hervorgeht, sind zwischen den beiden Endscheiben 38, 40 Distanzelemente 50 angeordnet, die jeweils an den beiden Endscheiben 38, 40 angeformt sind.

Der Ausgangskanal 48 ist im Wesentlichen ringförmig ausgebildet und steht in radialer Richtung mit der Innenwandung **52** des Flüssigkeitsfiltergehäuses 12 fluidisch in Verbindung. Der Ausgangskanal 48 ist ausgangsseitig mit einem seitlichen (radialseitig) angeordneten Flüssigkeitsauslass 54 des Flüssigkeitsfiltergehäuses 12 fluidisch verbunden. Der Flüssigkeitseinlass 58 ist relativ zum Flüssigkeitsauslass 54 des Flüssigkeitsfiltergehäuses 12 axial versetzt angeordnet.

Das Vorfilterelement 30 weist zum Abscheiden von in der Flüssigkeit enthaltenem Wasser eine Wasserabscheideeinheit **60** auf. Die Wasserabscheideeinheit 60 umfasst ein Koaleszermedium **62,** das ringförmig um die Längsachse 34 des Flüssigkeitsfiltereinsatzes 26 angeordnet ist. Das Koaleszermedium 62 kann, wie dies in den Figuren 1 und 2 gezeigt ist, dem Filtermedium 36 des Vorfilterelements 30 insbesondere fluidisch nachgeschaltet angeordnet sein. Das Koaleszermedium 62 liegt dabei vorteilhaft innenseitig an einem Mittelrohr **64** an, damit dieses bei seiner Druckbeaufschlagung im Betrieb des Flüssigkeitsfilters 10 nicht kollabiert. Das Mittelrohr 64 ist innerhalb des Stützrohrs 42 und koaxial zur Längsachse 34 des Flüssigkeitsfiltereinsatzes 26 angeordnet. Das Koaleszermedium 62 ist somit zwischen dem Mittelrohr 64 und dem Stützrohr 42 des Filtermediums 36 des Hauptfilterelements 28 angeordnet. Das Koaleszermedium 62 kann bedarfsweise ein- oder mehrlagig aufgebaut sein und beispielsweise aus einem Vliesstoff bestehen.

Wie aus den Figuren 1 und 2 hervorgeht, ist innerhalb des Mittelrohrs 64 ein Siebrohr **66** angeordnet. Das Siebrohr 66 dient funktionell als ein Endabscheider für das in der Flüssigkeit enthaltene Wasser. Das Siebrohr 66 ist zur Längsachse 34 des Flüssigkeitsfiltereinsatzes 26 koaxial verlaufend angeordnet. Das Innere des Siebrohrs 66 steht über einen Flüssigkeitsablaufkanal **68,** der sich in axialer Richtung teilweise durch das Hauptfilterelement 28 hindurcherstreckt, mit einem Flüssigkeitskanal **70** des Flüssigkeitsfiltergehäuses 12 fluidisch in Verbindung. Die durch das Vor- und Hauptfilterelement 30, 28 gefilterte und zumindest teilweise vom Wasser befreite Flüssigkeit strömt im Betrieb aus dem Innern des Siebrohrs 66 über den Flüssigkeitsablaufkanal 68 und den Flüssigkeitskanal 70 des Flüssigkeitsfiltergehäuses 12 nach unten aus dem Flüssigkeitsfiltereinsatz 26 ab.

An den Flüssigkeitskanal 70 ist eine (Flüssigkeits-)pumpe 56 anschließbar. Die Pumpe 56 dient dazu, die vorgefilterte Flüssigkeit in die Hauptfilterkammer 44 zu pumpen. Dies, um die vorgefilterte Flüssigkeit durch das Filtermedium 36 des Hauptfilterelements 28 zu drücken und durch das Vorfilterelement 30 zu saugen.

Zwischen dem Siebrohr 66 und dem Koaleszermedium 62 bzw. dem Mittelrohr 64 ist ein ringförmiger Wasserabscheidespalt **72** ausgebildet. Der Wasserabscheidespalt 72 ist nach unten hin offen ausgebildet und steht einenends mit einem längserstreckten Wasserablaufkanal **74** fluidisch in Verbindung.

An der unteren Endscheibe 38 des Vorfilterelements 30 ist ein im Wesentlichen rohrförmiges Wandelement **76** angeformt, das sich in axialer Richtung von der unteren Endscheibe 38 des Vorfilterelements 30 in Richtung des Filterkopfs 20, d. h. nach unten hin, wegerstreckt. Das Wandelement 76 erstreckt sich in axialer Richtung bis auf Höhe der unteren Endscheibe 38 des Hauptfilterelements 28 in das Hauptfilterelement 28 hinein. Das Wandelement 76 begrenzt die Hauptfilterkammer 44 in radialer Richtung innenseitig und trennt diese gegenüber dem Wasserablaufkanal 74 des Flüssigkeitsfiltereinsatzes 26 ab. Der Wasserablaufkanal 74 für das aus der Flüssigkeit abgeschiedene Wasser ist mit anderen Worten in radialer Richtung außenseitig durch das rohrförmige Wandelement 76 unmittelbar begrenzt.

Das Wandelement 76 trennt somit insgesamt einen das Hauptfilterelement 28 umfassenden Hochdruckbereich **78** und einen das Vorfilterelement 30 umfassenden Niederdruckbereich **80** des Flüssigkeitsfiltereinsatzes 26 gegeneinander ab.

Der Wasserablaufkanal 68 kann sich in axialer Richtung ganz oder teilweise durch das Hauptfilterelement 28 hindurcherstrecken und ist über einen Gehäuse- bzw. Wasserablaufstutzen **82** des Flüssigkeitsfiltergehäuses 12 mit einem Wasserableitkanal bzw. Wassersammelraum **84** des Flüssigkeitsfiltergehäuses 12 fluidisch verbunden.

Das rohrförmige Wandelement 76 und die untere Endscheibe 38 des Hauptfilterelements 28 begrenzen gemeinsam einen Dichtspalt **86,** in den der Gehäuse- bzw. Wasserablaufstutzen 82 in axialer Richtung dichtend hineinragt. Das Wandelement 76 liegt über ein Dichtungselement 43 innennseitig an dem Wasserablaufstutzen 82 und die untere Endscheibe 38 des Hauptfilterelements 28 über ein weiteres Dichtungselement 43 außenseitig an dem Wasserablaufstutzen 82 dichtend an. Dadurch ist der Niederdruckbreich mit der Vorfilterkammer 46 bzw. dem Wasserablaufkanal 74 gegenüber dem Hochdruckbereich abgedichtet.

Der Wasserablaufkanal 74 ist in radialer Richtung innenseitig durch ein Rohrelement **88** begrenzt. Das Rohrelement 88 bildet zugleich eine radial außenseitige Begrenzung des Flüssigkeitsablaufkanals 68. Das Rohrelement 88 ist einenends über einen zur Längsachse 34 des Flüssigkeitsfiltereinsatzes 26 schräg verlaufend angeordneten und gefensterten (nicht gezeigt) Verbindungsabschnitt **90** an einem zentral angeordneten Entlüfungsrohr 92 des Flüssigkeitsfilters 10 angeformt. Alternativ kann das Rohrelement 88 auch als Teil des Siebrohrs 66 des Flüssigkeitsfiltereinsatzes 26 ausgebildet sein.

Ein freier Endabschnitt des Siebrohrs 66 ist als eine Dichtlippe bzw. als ein Dichtkragen **94** ausgebildet und liegt an dem Rohrelement 88 vollumfänglich außenseitig dichtend an. Das Rohrelement 88 des Entlüftungsrohrs 92 ist anderenends, d. h. an seinem unteren Ende, mit einem Flüssigkeitsablaufstutzen **96** des Flüssigkeitsfiltergehäuses 12 verrastet und liegt an diesem über ein Dichtungselement 43 innenseitig dichtend an.

Das Entlüftungsrohr 92 dient dem Entlüften des Vorfilterelements 30 bzw. der Vorfilterkammer 46 und erstreckt sich koaxial zur Längsachse 34 des Flüssigkeitsfiltereinsatzes durch diesen hindurch. Das Entlüftungsrohr 92 kann mit seiner Einlassöffnung **98** einenends über die obere Endscheibe 40 des Vorfilterelements 30 axial hervorstehen. Die Einlassöffnung 98 des Entlüftungsrohrs 92 ist in diesem Fall zwischen der oberen Endscheibe 40 des Vorfilterelements 30 und dem Gehäusedeckel 18 angeordnet. Es versteht sich, dass das Entlüftungsrohr 92 auch bündig oder im Wesentlichen bündig zur oberen Endscheibe 40 des Hauptfilterelements 28 angeordnet sein kann. Das Entlüftungsrohr 92 ragt anderenends in einen Entlüftungsstutzen **100** des Flüssigkeitsfiltergehäuses 12 dichtend hinein. Der Entlüftungsstutzen 100 kann mit dem Flüssigkeitsrücklauf 24 des Flüssigkeitsfiltergehäuses 12 fluidisch in Verbindung stehen. Im Betrieb des Flüssigkeitsfilters 10 können so im Bereich der Vorfilterkammer 46 in der Flüssigkeit enthaltene Luft bzw. Ausgasungen der Flüssigkeit über das Entlüftungsrohr 92 und den Flüssigkeitsrücklauf 24 des Flüssigkeitsfiltergehäuses 12 aus dem Flüssigkeitsfiltergehäuse 12 evakuiert werden. Das Entlüftungsrohr 92 kann aus Sicherheitsgründen, beispielsweise im Bereich seiner Einlassöffnung 98, mit einer Drossel **102** versehen sein.

Die Hauptfilterkammer 44 ist nach unten durch einen Gehäuseboden **104** des Flüssigkeitsfiltergehäuses 12 begrenzt. Das Hauptfilterelement 28 ist in seinem gezeigten Einbauzustand vom Gehäuseboden 104 axial beabstandet angeordnet. Dadurch ist zwischen der unteren Endscheibe 38 des Hauptfilterelements 28 und dem Gehäuseboden 104 ein Flüssigkeitsablaufkanal **106** gebildet bzw. definiert. Der Flüssigkeitsablaufkanal 106 umgreift die Längsachse 32 des Flüssigkeitsfiltergehäuses 12 und ist zum Flüssigkeitsrücklauf 24 des Flüssigkeitsfiltergehäuses 12 offen, d. h. mit diesem fluidisch verbunden.

Der Filtertopf 14 weist einen Innenquerschnitt auf, der sich axial in Richtung auf den Gehäuseboden 102, d. h. in Einführrichtung **108'** des Flüssigkeitsfiltereinsatzes 26, stufenweise verjüngt. Das Flüssigkeitsfiltergehäuse 12 weist dadurch im Bereich seiner Innenwandung 52 Dichtflächenabschnitte **110** (siehe Figur 2) für die dichtende Anlage der Endscheiben 38, 40 des Flüssigkeitsfiltereinsatzes 26 auf, die mit zunehmendem Abstand von der Einführöffnung 16 des Flüssigkeitsfiltergehäuses 12 in Richtung des Gehäusebodens 104 von der Längsachse 34 des Flüssigkeitsfilterelements 26 weniger weit beabstandet sind. Die Dichtungselemente 43 der unteren Endscheibe 38 des Vorfilterelements 30 sowie der beiden Endscheiben 38, 40 des Hauptfilterelements 28 sind in dazu korrespondierender Weise zur Längsachse 34 des Flüssigkeitsfiltereinsatzes 26 unterschiedlich weit beabstandet und liegen in der gezeigten Betriebsposition des Flüssigkeitsfiltereinsatzes 26 im Flüssigkeitsfiltergehäuse 12 an den Dichtflächenabschnitten 110 des Filtertopfs 14 dichtend an. Dadurch kann der Flüssigkeitsfiltereinsatz 26 vereinfacht und ohne eine unnötige Überbeanspruchung seiner Dichtungselemente 43 in seine Betriebsposition im Flüssigkeitsfiltergehäuse 12 eingesetzt werden.

Für einen Austausch des Flüssigkeitsfiltereinsatzes 26 wird dieser entgegen der Einführrichtung 108' axial aus dem Filtertopf 14 herausbewegt. Sobald der Flüssigkeitsfiltereinsatz 26 über eine mit **112** (siehe Fig. 2) bezeichnete axiale Wegstrecke aus seiner gezeigten Einbauposition in eine Drainageposition bewegt ist, sind die Dichtungselemente 43 der unteren und der oberen Endscheiben 38, 40 des Hauptfilterelements 28 sowie der unteren Endscheibe 38 des Vorfilterelements 30 aus ihrer jeweiligen Dichtposition am Flüssigkeitsfiltergehäuse 12 bzw. dem Wasserablaufstutzen 82 entfernt. Folglich steht die Vorfilterkammer 46 über die Hauptfilterkammer 44 mit dem Flüssigkeitsablaufkanal 106 fluidisch in Verbindung. Dadurch kann die rohseitige Flüssigkeit aus der Vorfilterkammer 46 über die Hauptfilterkammer 44 gemeinsam mit der dort rohseitig angeordneten Flüssigkeit - der Schwerkraft folgend - in den Flüssigkeitsablaufkanal 106 strömen. Über den Flüssigkeitsablaufkanal 106 kann die Flüssigkeit zum Flüssigkeitsrücklauf 24 abfließen.

Zu beachten ist, dass die axiale Länge des gehäuseseitigen Wasserablaufstutzens 82 derart bemessen ist, dass das Dichtungselement 43 des Wandelements 76 in der Drainageposition des Flüssigkeitsfiltereinsatzes 26 weiterhin am Wasserablaufstutzen 82 dichtend anliegt. Dadurch wird sichergestellt, dass Flüssigkeit aus der Hauptfilterkammer 44 nicht auf die Reinseite des Flüssigkeitsfilters 10, hier den Wasserablauf(stutzen) bzw. den Flüssigkeitsablaufstutzen 96 des Flüssigkeitskanals 70 gelangt.

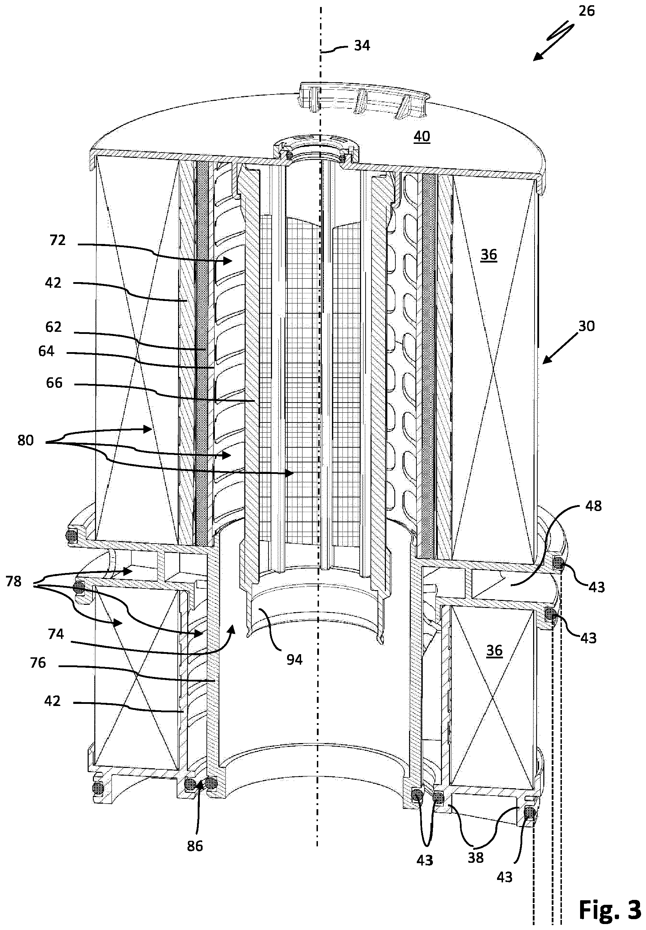

**Figur 3** zeigt den Flüssigkeitsfiltereinsatz aus den Figuren 1 und 2 in einer freigestellten Darstellung und in einem Längsschnitt. Die Gitterstruktur des Siebrohrs 66 ist in dieser Darstellung gut zu erkennen. Das Siebrohr 66 ist mit der oberen Endscheibe 40 des Vorfilterelements 30 verrastet. Der Dichtkragen 94 des Siebrohrs 66 kann aus einem elastisch verformbaren (Kunststoff-)Material bestehen. Der Dichtkragen 94 kann dadurch beim axial gerichteten Einführen des Flüssigkeitsfiltereinsatzes 26 in das Flüssigkeitsfiltergehäuse 12 (Figuren 1 und 2) unter Führung an dem schräg verlaufenden Verbindungsabschnitt 90 des Entlüftungsrohrs 92 auf das Rohrelement 88 dichtend aufgeschoben werden. Die untere Endscheibe 38 des Vorfilterelements 30 weist innenumfangsseitig einen Haltesteg **114** (siehe Fig. 2) auf. Der Haltesteg 114 steht von der unteren Endscheibe 38 axial in Richtung auf die obere Endscheibe 40 des Vorfilterelements 30 weg und stützt das Mittelrohr 64 innenseitig ab.

Im Betrieb des Flüssigkeitsfilters 10 (siehe Fig. 1) strömt die ungefilterte Flüssigkeit über den Flüssigkeitszulauf 58 des Flüssigkeitsfiltergehäuses 12 in die Vorfilterkammer 46 und durchströmt das Filtermedium 36 des Vorfilterelements 30 in radialer Richtung von außen nach innen. Die vorgefilterte Flüssigkeit durchströmt das Koaleszermedium 62 und das Siebrohr 66 in einer zur Längsachse 34 des Flüssigkeitsfiltereinsatzes 26 radialen Richtung von außen nach innen. Dabei wird das in der Flüssigkeit enthaltene Wasser zumindest teilweise aus der Flüssigkeit abgeschieden und fließt der Schwerkraft folgend vom Wasserabscheidespalt 72 über den Wasserablaufkanal 74 nach unten in den Wassersammelraum 84 des Flüssigkeitsfiltergehäuses 12. Die auf diese Weise von Verunreinigungen befreite Flüssigkeit fließt über den Flüssigkeitskanal 70 aus dem Flüssigkeitsfilter 10 und einem ersten Pumpenanschluss **107** heraus und wird mittels der fluidisch zwischengeschalteten Pumpe 56 durch einen zweiten Pumpenanschluss **22** in die Hauptfilterkammer 44 des Flüssigkeitsfiltergehäuses 12 gepumpt. Dort durchströmt die Flüssigkeit das Filtermedium 36 des Hauptfilterelements 28 und fließt anschließend in den Strömungskanal 48. Von dort gelangt sie in den Flüssigkeitsauslass 54 des Flüssigkeitsfiltergehäuses 12 und kann einem Verbrennungsmotor bzw. einer Flüssigkeitseinspritzpumpe zugeführt werden.

Die Verbindung **108** weist hier den Flüssigkeitskanal 70, insbesondere die Pumpe 56, den ersten Pumpenanschluss 107 und den zweiten Pumpenanschluss 22 auf.
Zum Austausch des Flüssigkeitsfiltereinsatzes 26 wird in einem ersten Schritt der Gehäusedeckel 18 vom Filtertopf 20 entfernt. Die Bajonettverbindung 41 zwischen dem Gehäusedeckel 18 und dem Flüssigkeitsfiltereinsatz 26 ist geschlossen oder wird durch die Schraubbewegung des Gehäusedeckels 18 geschlossen. Der Flüssigkeitsfiltereinsatz 26 wird durch die Schraubbewegung als Ganzes axial in Richtung der Längsachse 32 des Flüssigkeitsfiltergehäuses 12 aus seiner Einbauposition (Fig. 1 und 2) bewegt. Sobald sich der Flüssigkeitsfiltereinsatz 26 in Drainageposition befindet, strömt die rohseitige Flüssigkeit aus der Vorfilterkammer 46 des Flüssigkeitsfiltergehäuses 12 in die rohseitige Hauptfilterkammer 44 und gemeinsam mit der dort angeordneten rohseitigen Flüssigkeit über den Flüssigkeitsablaufkanal 106 in den Flüssigkeitsrücklauf 24 sowie ggf. einen mit diesem fluidisch verbundenen Flüssigkeitstank. Bei einem weiteren Abdrehen bzw. Abheben des Gehäusedeckels 18 vom Filtertopf 14 gemeinsam mit dem Flüssigkeitsfiltereinsatz 26 wird auch das innenseitige Dichtungselement 43 des Wandelements 76 sowie das am Wasserablaufstutzen 82 anliegende Dichtungselement 43 der unteren Endscheibe 38 des Hauptfilterelements 28 aus ihrer dichtenden Anlage am Wasserablaufstutzen 82 bewegt. Ein reinseitig ggf. vorhandener Flüssigkeitsspiegel eines Flüssigkeits-Wasser-Gemischs kann dann nach radial außen in den Flüssigkeitsablaufkanal 106 strömen und über den Flüssigkeitsrücklauf 24 aus dem Flüssigkeitsfiltergehäuse 12 abfließen. Nach dem vollständigen Entfernen des Flüssigkeitsfiltereinsatzes 26 aus dem Filtertopf 14 wird dieser vom Gehäusedeckel 18 abgekoppelt und ein neuer Flüssigkeitsfiltereinsatz 26 am Gehäusedeckel 18 befestigt. Der Flüssigkeitsfilterein-satz 26 wird nachfolgend in Einführrichtung in den Filtertopf 14 eingesetzt und durch Festschrauben des Gehäusedeckels 18 am Filtertopf 14 in seine Einbauposition überführt (Fig. 1 und 2).

Unter Vornahme einer Zusammenschau aller Figuren der Zeichnung betrifft die Erfindung zusammenfassend einen Flüssigkeitsfiltereinsatz 26. Der erfindungsgemäße Flüssigkeitsfiltereinsatz 26 für einen Flüssigkeitsfilter 10 weist ein Vorfilterelement 30 und ein Hauptfilterelement 28 auf, die in einer zur Längsachse 34 des Flüssigkeitsfiltereinsatzes 26 axialen Richtung übereinanderliegend angeordnet sind. Ferner umfasst er eine Verbindung, durch welche die Flüssigkeit von dem Vorfilterelement 30 zu dem Hauptfilterelement 28 fließen kann, wobei das Vorfilterelement 30 eine Wasserabscheideeinheit 60 zum Abscheiden von in der Flüssigkeit enthaltenem Wasser und ein Filtermedium 36 aufweist. Die Wasserabscheideeinheit 60 ist derart zwischen dem Filtermedium 36 des Vorfilterelements 30 und der Verbindung 108 angeordnet, dass die Flüssigkeit von diesem Filtermedium 36 durch die Wasserabscheideeinheit 60 in die Verbindung 108 fließen kann.

## Patentansprüche

1. Flüssigkeitsfiltereinsatz (26) für einen Flüssigkeitsfilter (10), aufweisend ein Vorfilterelement (30) und ein mit dem Vorfilterelement (30) verbundenes Hauptfilterelement (28), die in einer zur Längsachse (34) des Flüssigkeitsfiltereinsatzes (26) axialen Richtung übereinanderliegend angeordnet sind, sowie eine Verbindung (108), durch welche die Flüssigkeit von dem Vorfilterelement (30) zu dem Hauptfilterelement (28) fließen kann, wobei das Vorfilterelement (30) eine Wasserabscheideeinheit (60) zum Abscheiden von in der Flüssigkeit enthaltenem Wasser und ein Filtermedium (36) aufweist,
wobei die Wasserabscheideeinheit (60) derart zwischen dem Filtermedium (36) des Vorfilterelements (30) und der Verbindung (108) angeordnet ist, dass die Flüssigkeit von diesem Filtermedium (36) durch die Wasserabscheideeinheit (60) in die Verbindung (108) fließen kann, **dadurch gekennzeichnet, dass** die Wasserabscheideeinheit (60) einen Wasserablaufkanal (74) für das aus der Flüssigkeit abgeschiedene Wasser aufweist, der sich in axialer Richtung zumindest teilweise durch das Hauptfilterelement (28) erstreckt.

2. Flüssigkeitsfiltereinsatz nach Anspruch 1, **dadurch gekennzeichnet, dass** das Vorfilterelement (30) im montierten Zustand des Flüssigkeitsfiltereinsatzes (26) oberhalb des Hauptfilterelements (28) angeordnet ist.

3. Flüssigkeitsfilter (10) mit Flüssigkeitsfiltergehäuse (12) und Flüssigkeitsfiltereinsatz (26) nach einem der vorgehenden Ansprüche, **dadurch gekennzeichnet, dass** die Verbindung einen Pumpenanschluss (107) aufweist.

4. Flüssigkeitsfilter nach Anspruch 3, **dadurch gekennzeichnet, dass** das Flüssigkeitsfiltergehäuse (12) einen Flüssigkeitskanal (70) aufweist, der mit dem Pumpenanschluss (107) fluidisch verbunden ist.

5. Flüssigkeitsfilter nach einem der Ansprüche 3 oder 4, **dadurch gekennzeichnet, dass** der Pumpenanschluss (107) mit einer Pumpe (56) des Flüssigkeitsfilters (10) verbunden ist, wobei die Pumpe (56) weiterhin fluidisch mit dem Hauptfilterelement (28) verbunden ist.

6. Flüssigkeitsfilter nach einem der vorherigen Ansprüche, **dadurch gekennzeichnet, dass** der Flüssigkeitsfilter (10) in Form eines Kraftstofffilters ausgebildet ist.

7. Flüssigkeitsfilter nach einem der Ansprüche 1 bis 6, **dadurch gekennzeichnet, dass** der Flüssigkeitsfilter (10) in Form eines Ölfilters ausgebildet ist.
